Europäisches Patentamt

European Patent Office

Office européen des brevets

(19)

(11) EP 0 524 043 B1

(12) # FASCICULE DE BREVET EUROPEEN

(45) Date de publication et mention
de la délivrance du brevet:
**10.01.1996 Bulletin 1996/02**

(51) Int Cl.6: **G06T 5/00**

(21) Numéro de dépôt: **92401798.1**

(22) Date de dépôt: **25.06.1992**

(54) **Procédé d'enregistrement et de traitement d'une image et instrument de prise de vues pour la mise en oeuvre de ce procédé**

Verfahren zur Verarbeitung und Aufzeichnung von Bildern und Aufnahmevorrichtung zur Durchführung dieses Verfahrens

Image processing and recording method and pick-up device for carrying out this method

(84) Etats contractants désignés:
**DE ES FR GB IT NL SE**

(30) Priorité: **27.06.1991 FR 9107962**

(43) Date de publication de la demande:
**20.01.1993 Bulletin 1993/03**

(73) Titulaire:
**CENTRE NATIONAL D'ETUDES SPATIALES**
**F-75001 Paris (FR)**

(72) Inventeur: **Martinuzzi, Jean-Michel**
**F-31000 Toulouse (FR)**

(74) Mandataire: **Schrimpf, Robert**
**F-75116 Paris (FR)**

(56) Documents cités:
**EP-A- 0 157 490**

• **PATENT ABSTRACTS OF JAPAN vol. 10, no. 108 (E-398)(2165) 23 Avril 1986**

## Description

La présente invention concerne un procédé d'enregistrement et de traitement d'une image d'une scène située dans un plan P donné rapporté à deux directions perpendiculaires x, y, ladite image étant fournie par un instrument de prise de vues présentant, dans la direction u (u = x, y) du plan P, une fonction de transfert de modulation $H_u$ (f) de fréquence de coupure $f_{cu}$, f désignant la fréquence spatiale.

L'invention trouve une application particulièrement avantageuse dans le domaine de l'observation de la Terre à partir de satellites artificiels.

Les instruments de prise de vues utilisés dans les systèmes satellitaires d'observation de la Terre comportent, soit un détecteur élémentaire dont l'image dans le plan P parcourt la scène à enregistrer à l'aide d'un dispositif de balayage mécanique couplé au mouvement de translation ou de rotation du satellite, soit une barrette linéaire de détecteurs élémentaires, par exemple du type à couplage de charges (CCD), avec balayage en translation dans la direction perpendiculaire à l'axe de ladite barrette (balayage dit "pushbroom").

De façon usuelle, un tel procédé comprend une première étape d'enregistrement de l'image à une fréquence d'échantillonnage $f_{eu}$ dans la direction u, égale à la fréquence de coupure $f_{cu}$ dont l'inverse correspond à la résolution spatiale au niveau du plan P d'observation. Cette résolution est en général limitée par les dimensions du (des) détecteur (s) élémentaire(s) utilisé(s).

Toutefois, du fait que le dispositif de formation d'images de l'instrument de prise de vues, un télescope par exemple, n'est pas lui-même parfait, la fonction de transfert de modulation $H_u(f)$ n'est pas égale à 1 sur tout le spectre de fréquence, ce qui conduit à une dégradation de l'image enregistrée de la scène à observer. Il est possible de traiter cette image en lui appliquant un filtre de déconvolution. Si on appelle $P_u(f)$ et $S_u(f)$ les spectres de fréquence respectifs dans la direction u de la scène à observer et de l'image enregistrée, on a la relation :

$$S_u (f) = H_u (f)\ P_u (f)$$

Pour restituer $P_u(f)$, il faut donc appliquer à $S_u(f)$ un filtre de déconvolution qui dans le domaine fréquentiel est égal à l'inverse de la fonction de transfert de modulation

$$P_u (f) = \frac{1}{H_u (f)}\ S_u (f)$$

Ce qui s'exprime dans le domaine spatial par le produit de convolution :

$$p(u) = TF^{-1} [\frac{1}{H_u (f)}] \otimes s(u)$$

$TF^{-1}$ désignant la transformée de Fourier inverse, et p(u) et s(u) étant les fonctions spatiales représentant respectivement la scène et son image.

Cependant la théorie du traitement du signal, notamment le théorème de Shannon, montre que seules les fréquences inférieures ou égales à la moitié de la fréquence d'échantillonnage peuvent être restituées par déconvolution, cette limitation étant due au phénomène général de repliement spectral. De plus, lors de la déconvolution, les hautes fréquences, comprises entre $f_{eu}/2$ et $f_{eu}$, viennent perturber les basses fréquences comprises entre 0 et $f_{eu/2}$.

Il a été proposé dans l'article "Repliement spectral lié à l'utilisation de détecteurs constitués de cellules CCD" de G. Jacquemod et al., paru dans la revue "Traitement du Signal" Vol. 5, n° 1, 1988, de limiter l'influence du repliement spectral par un suréchantillonnage de l'image, la fréquence d'échantillonnage $f_{eu}$ étant prise égale à $kf_{cu}$, k étant un nombre entier supérieur à 1. Dans ce cas, il est possible de restituer les fréquences au moins jusqu'à la fréquence de coupure $f_{cu}$. D'autre part, comme au-delà de $f_{cu}$ la fonction de transfert de modulation est pratiquement nulle, les fréquences supérieures à $f_{cu}$ sont sans effet sur les basses fréquences inférieures à $f_{cu}$.

On dispose donc d'un moyen d'augmenter d'un facteur k la résolution dans la direction u d'un instrument de prise de vues donné ou, selon un autre aspect du procédé, de réaliser un instrument de prise de vues ayant les mêmes performances de résolution mais de moindre encombrement dans la mesure où la distance focale du dispositif de formation d'images peut être divisée par k tout en conservant la même ouverture numérique, et donc le même rapport signal à bruit. Cette dernière possibilité présente un avantage très important dans le cas de l'application spatiale envisagée ci-dessus puisque ne serait-ce qu'un facteur k = 2 permettrait un gain de 8 en volume et 4 à 5 sur la masse de l'instrument de prise de vues, d'où une diminution appréciable de la charge utile du satellite.

Il faut cependant signaler que les avantages précités ne sont pas sans inconvénients. En effet, que ce soit dans le cas d'une augmentation de la résolution d'un instrument de prise de vues donné, ou dans celui de l'utilisation d'un dispositif de formation d'images de distance focale réduite, l'opération de déconvolution a pour conséquence une diminution du rapport signal à bruit, ceci étant dû au fait que, compte tenu du spectre de bruit $B_u(f)$, le signal radiométrique $S_u(f)$ de l'image s'écrit :

$$S_u(f) = H_u(f)\ P_u(f) + B_u(f)\ .$$

L'application du filtre de déconvolution conduit à une scène restituée :

$$P_u'(f) = \frac{S_u(f)}{H_u(f)} = P_u(f) + \frac{B_u(f)}{H_u(f)}$$

La fonction de transfert de modulation $H_u(f)$ étant au plus égale à 1, on comprend que l'effet du bruit $B_u(f)$ a tendance à augmenter.

Aussi, le problème technique à résoudre par l'objet de la présente invention est de proposer un procédé conforme au préambule, comprenant, d'une part, une première étape d'enregistrement de ladite image à une fréquence d'échantillonnage $f_{eu}$ de l'image dans la direction u égale à $kf_{cu}$, k étant un nombre entier supérieur à 1, et, d'autre part, une deuxième étape de traitement de l'image enregistrée consistant à appliquer àladite image un filtre de déconvolution, procédé qui permettrait, lors de l'opération de déconvolution, de conserver l'essentiel des avantages du procédé de suréchantillonnage tout en ayant la possibilité de toujours maîtriser le niveau de bruit final à une valeur acceptable.

La solution au problème technique posé consiste, selon la présente invention telle qu'exposée dans les revendications 1 et 5, en ce que ledit filtre de déconvolution est égal, dans le domaine fréquentiel et pour chaque direction u, au produit de l'inverse de la fonction de transfert de modulation $H_u(f)$ par une fonction de troncature $I_u(f)$ ajustable.

Ainsi, la scène reconstituée a pour spectre de fréquence :

$$P_u'(f) = I_u(f)\ P_u(f) + I_u(f)\ \frac{B_u(f)}{H_u(f)}$$

On notera que l'effet de la fonction de troncature $I_u(f)$ varie en sens contraire selon que l'on considère la qualité image ou le rapport signal à bruit. Si l'on désire limiter sensiblement le bruit final, on choisira une fonction de troncature faible, au détriment de la résolution spatiale représentée par $I_u(f)\ P_u(f)$, ce qui n'est pas très pénalisant dans le cas d'un instrument de prise de vues donné dont le suréchantillonnage augmente la résolution et réduit le signal. Par contre, pour un instrument sous-dimensionné dont le suréchantillonnage permet de maintenir la résolution avec une même ouverture et donc le même signal, on pourra choisir une fonction de troncature $I_u(f)$ plus importante. Bien entendu, selon l'instrument considéré, la fonction de troncature sera choisie et adaptée, en tenant compte des caractéristiques de la mission à accomplir.

La description qui va suivre en regard des dessins annexés, donnés à titre d'exemples non limitatifs fera bien comprendre en quoi consiste l'invention et comment elle peut être réalisée.

La figure 1 est un schéma d'un instrument de prise de vues pour la mise en oeuvre du procédé selon l'invention.

La figure 2 montre une fonction de transfert de modulation typique de l'instrument de la figure 1.

La figure 3 montre une fonction de troncature applicable en combinaison avec la fonction de transfert de modulation de la figure 2.

La figure 4a montre un mode de réalisation du suréchantillonnage colonne pour une barrette linéaire de détecteurs.

La figure 4b montre un mode de réalisation du suréchantillonnage ligne pour une barrette linéaire de détecteurs.

La figure 5 est un premier montage de barrettes linéaires réalisant un suréchantillonnage ligne d'ordre 2.

La figure 6 est un deuxième montage de barrettes linéaires réalisant un suréchantillonnage ligne d'ordre 2.

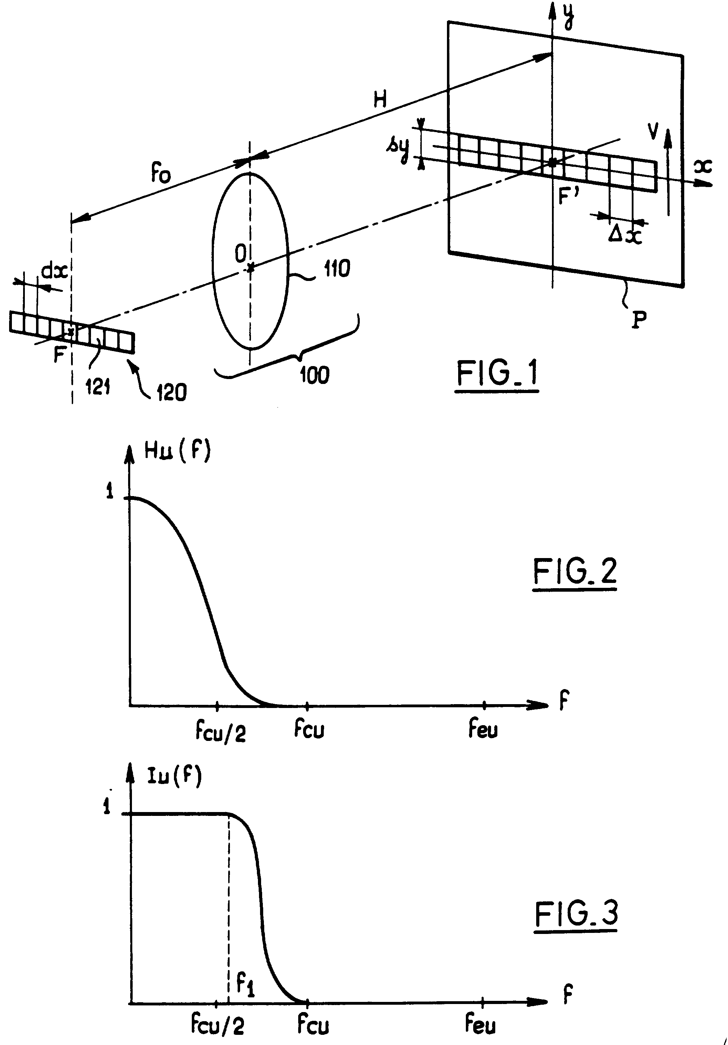

La figure 1 représente de façon schématique un instrument 100 de prise de vues, installé par exemple à bord d'un satellite artificiel de la Terre, et destiné à fournir une image d'une scène située dans un plan P donné, rapporté à deux directions perpendiculaires x, y. Dans l'application envisagée, le plan P correspond au sol.

L'instrument 100 de prise de vues est constitué, d'une part, d'un dispositif de formation d'images schématisé par une lentille 110, mais qui pourrait être tout aussi bien un télescope à miroirs par exemple, et, d'autre part, d'une barrette linéaire 120 de détecteurs élémentaires 121 du type CCD, placée au foyer F de la lentille 110. Dans la suite de la description et sans que cela ne soit limitatif, les détecteurs élémentaires 121 sont supposés de forme carrée. Comme on peut le voir sur la figure 1, le mode de balayage du plan P est du type "pushbroom" dans lequel l'image d'axe x de la barrette linéaire 120 se déplace dans la direction perpendiculaire y avec une vitesse V égale à la vitesse au sol du satellite.

L'instrument 100 de prise de vues présente dans chaque direction u = x, y du plan P une fonction de transfert de modulation $H_u(f)$ dont une allure typique est donnée sur la figure 2. Cette fonction de transfert de modulation s'annule pour une fréquence de coupure $f_{cu}$ correspondant à la résolution de l'instrument 100. Généralement, le pouvoir de résolution est limité par la structure discontinue des détecteurs plus que par la qualité du dispositif de formation d'images. Si dx représente la taille des détecteurs élémentaires 121, la résolution au sol $\Delta u$ dans la direction u du plan P est donnée par

$$\Delta u = \frac{H}{fo}\ dx$$

H étant l'altitude du satellite et fo la distance focale du dispositif de formation d'images. A titre d'exemple, pour un satellite dont l'orbite est située à 800 km de la Terre, une distance focale de l m et des détecteurs élémentaires de 7 µm de côté, on atteint une résolution au sol de 5,6 m.

La fréquence de coupure $f_{cu}$ est alors sensiblement égale à

$$f_{cu} = \frac{1}{\Delta u} \times \frac{fo}{Hdx}$$

L'image de la scène à observer est d'abord enregistrée à une fréquence d'échantillonnage $f_{eu}$ dans la direction u égale à $kf_{cu}$, k étant un nombre entier supérieur à 1. Dans le mode de réalisation particulier montré à la figure 2, le coefficient de suréchantillonnage k a été pris égal à 2, de sorte que $f_{eu}$ vaut

$$f_{eu} = 2 f_{cu} = \frac{2}{\Delta u}$$

Après cette première étape d'enregistrement, l'image enregistrée $S_u(f)$ est soumise à une opération de traitement consistant à lui appliquer un filtre de déconvolution égal, dans le domaine fréquentiel et dans chaque direction u, au produit de l'inverse de la fonction de transfert de modulation $H_u(f)$ par une fonction de troncature $I_u(f)$.

La figure 3 montre un exemple d'une telle fonction de troncature analytiquement donnée par

$$I_u(f) = \begin{cases} 1 & \text{si } f \leqslant f_1 \\[2mm] \cos^2 \dfrac{\pi (f-f_1)}{2(f_{cu}-f_1)} & \text{si } f_1 \leqslant f \leqslant f_{cu} \\[2mm] 0 & \text{si } f \geqslant f_1 \end{cases}$$

Cette courbe est connue sous le nom de fenêtre de Hanning.

Comme cela a été expliqué plus haut, la fonction de troncature $I_u(f)$ est ajustable de manière à obtenir, en fonction de la mission envisagée, le meilleur compromis entre résolution spatiale et rapport signal à bruit.

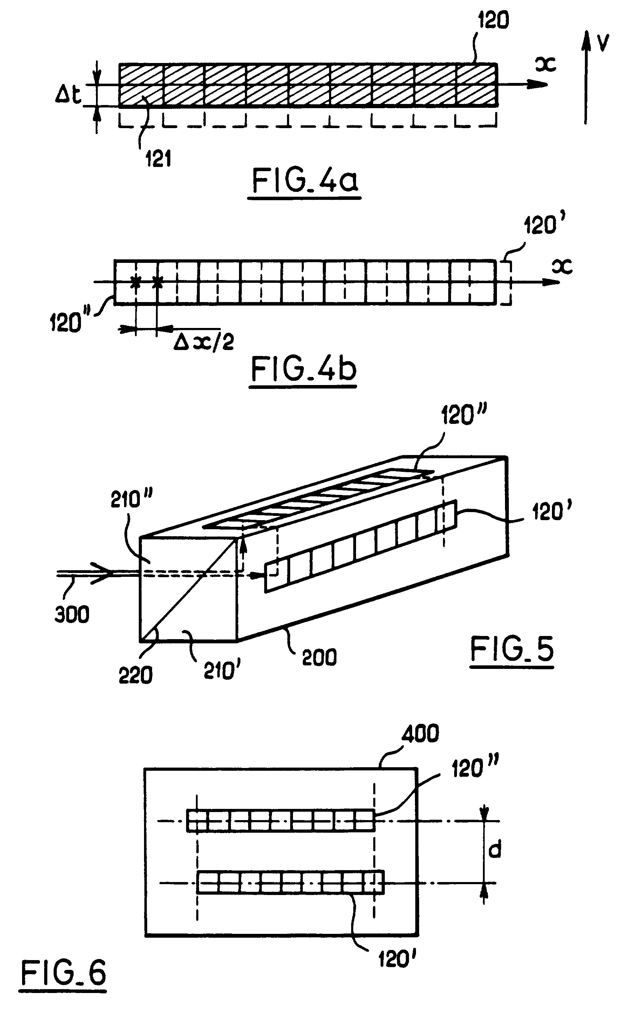

Les figures 4a et 4b indiquent respectivement comment, dans le cas d'une barrette linéaire de CCD, un suréchantillonnage par 2 en colonne et en ligne peut être obtenu.

En ce qui concerne le suréchantillonnage colonne (Figure 4a), il suffit de disposer d'un temps d'intégration $T_i$ de la barrette égal au temps $\Delta t$ qui met la trace au sol du satellite pour parcourir la distance $\Delta y/2$ soit :

$$T_i = \Delta t = \frac{\Delta y}{2V} = \frac{\Delta u}{2V}$$

Pour réaliser le suréchantillonnage ligne (Figure 4b), il suffit de disposer de deux barrettes élémentaires parallèles, de même pas dx, décalées l'une par rapport à l'autre de la distance dx/2 de sorte que les images de ces deux barrettes dans le plan P soient décalées de $\Delta x/2 = \Delta u/2$.

La figure 5 donne un premier montage de deux barrettes linéaires réalisant un suréchantillonnage ligne d'ordre 2. Les barrettes 120' et 120" sont montées chacune sur une face d'un prisme respectif 210', 210", lesdits prismes étant accolés de façon à constituer un diviseur optique 200 de ligne. Le flux incident 300 se partage à l'interface 220 des deux prismes formant lame semi-réfléchissante. Chaque barrette linéaire 120' et 120" ne reçoit donc que la moitié de l'énergie lumineuse provenant de la scène à observer, d'où une limitation du rapport signal à bruit.

Le montage représenté sur la figure 6 permet d'obtenir un suréchantillonnage d'ordre 2 avec un signal multiplié par un facteur 2 par rapport au montage précédent. Les deux barrettes linéaires 120', 120", décalées de dx/2, sont réalisées dans un même composant 400, et, de façon à assurer la synchronisation des images enregistrées séparément par chacune des barrettes, le retard à l'enregistrement de l'une des barrettes par rapport à l'autre doit être égal à $k'T_i$, k' étant un nombre entier non nul, ce qui impose que la distance d séparant les barrettes soit égale à k'dx/2. Dans ce deuxième montage, chaque ligne de détecteurs reçoit l'intégralité du flux lumineux incident, d'où un signal double de celui correspondant au montage de la figure 5. Dans le cas où le bruit photonique est prépondérant, le rapport signal à bruit est multiplié par un facteur égal à $\sqrt{2}$.

Il faut également noter que le dernier montage peut se généraliser au cas d'un suréchantillonnage d'ordre k supérieur à 2. Il suffit de disposer dans un même composant de k barrettes linéaires décalées de dx/k et distantes de k'dx/k. Le nombre k est seulement limité par les possibilités technologiques de réaliser un composant à plusieurs barrettes.

Enfin, l'invention a été décrite en mettant en oeuvre une pluralité de détecteurs élémentaires assemblés en barrettes, mais il est bien entendu qu'elle pourrait tout aussi bien être réalisée avec un seul détecteur élémentaire. Dans ce cas, l'enregistrement de l'image sur le détecteur est effectué par balayage de l'image dudit détecteur élémentaire dans les deux directions du plan P avec suréchantillonnage sur chacun des balayages.

## Revendications

1. Procédé d'enregistrement et de traitement d'une image d'une scène située dans un plan P donné rapporté à deux directions perpendiculaires x, y, ladite image étant fournie par un instrument (100) de prise de vues présentant, dans la direction u (u = x, y) du plan P, une fonction de transfert de modulation $H_u(f)$ de fréquence de coupure $f_{cu}$, f désignant la fréquence spatiale, procédé comprenant, d'une part, une première étape d'enregistrement de ladite image à une fréquence d'échantillonnage $f_{eu}$ de l'image dans la direction u, égale à $kf_{cu}$, k étant un nombre entier supérieur à 1 et, d'autre part, une deuxième étape de traitement de l'image enregistrée consistant à appliquer à ladite image un filtre de déconvolution, caractérisé en ce que ledit filtre de déconvolution est égal, dans le domaine fréquentiel et pour chaque direction u, au produit de l'inverse de la fonction de transfert de modulation $H_u(f)$ par une fonction de troncature $l_u(f)$ ajustable.

2. Procédé selon la revendication I, caractérisé en ce que, ledit instrument de prise de vues comportant au moins un détecteur élémentaire (121) et la fréquence de coupure $f_{cu}$ étant sensiblement égale à l'inverse de la dimension $\Delta u$ de l'image dudit détecteur élémentaire dans la direction u du plan P, la fréquence d'échantillonnage $f_{eu}$ est égale à $k/\Delta u$.

3. Procédé selon l'une des revendications 1 ou 2, caractérisé en ce que, ledit instrument de prise de vues comportant un détecteur élémentaire (121), l'enregistrement de ladite image est réalisé par balayage de l'image dudit détecteur élémentaire dans les deux directions x, y du plan P.

4. Procédé selon l'une des revendications 1 ou 2, caractérisé en ce que, ledit instrument (100) de prise de vues comportant au moins une barrette linéaire (120) d'une pluralité de détecteurs élémentaires (121) dont les images dans le plan P sont alignées dans la direction x, l'enregistrement de ladite image est réalisé par balayage de l'image de ladite barrette linéaire (120) dans la direction y.

5. Dispositif d'enregistrement et de traitement d'une image d'une scène située dans un plan P donné rapporté à deux directions perpendiculaires x, y, ladite image étant fournie par un instrument (100) de prise de vues présentant, dans la direction u (u = x, y) du plan P, une fonction de transfert de modulation $H_u(f)$ de fréquence de coupure $f_{cu}$, f désignant la fréquence spatiale, dispositif comprenant, d'une part, des moyens d'enregistrement de ladite image à une fréquence d'échantillonnage $f_{eu}$ de l'image dans la direction u, égale à $kf_{cu}$, k étant un nombre entier supérieur à 1 et, d'autre part, des moyens de traitement de l'image enregistrée appliquant à ladite image un filtre de déconvolution, caractérisé en ce que ledit filtre de déconvolution est égal, dans le domaine fréquentiel et pour chaque direction u, au produit de l'inverse de la fonction de transfert de modulation $H_u(f)$ par une fonction de troncature $l_u(f)$ ajustable, caractérisé en ce que, ledit instrument de prise de vues comporte au moins un détecteur élémentaire (121) et la fréquence de coupure $f_{cu}$ étant sensiblement égale à l'inverse de la dimension $\Delta u$ de l'image dudit détecteur élémentaire dans la direction u du plan P, la fréquence d'échantillonnage $f_{eu}$ étant égale à $k/\Delta u$, caractérisé en ce que, ledit instrument (100) de prise de vues comporte au moins une barrette linéaire (120) d'une pluralité de détecteurs élémentaires (121) dont les images dans le plan P sont alignées dans la direction x, l'enregistrement de ladite image étant réalisé par balayage de l'image de ladite barrette linéaire (120) dans la direction y, caractérisé en ce que ledit instrument (100) comporte k barrettes linéaires parallèles (120, 120"), de même pas dx, décalées successivement de la distance dx/k et séparées l'une de l'autre de la distance k'dx/k, k' étant un nombre entier non nul.

6. Dispositif selon la revendication 4, caractérisé en ce que, le nombre k étant égal à 2, ledit instrument (100) comporte au moins deux barrettes linéaires parallèles (120', 120") de même pas dx, disposées sur un diviseur optique de ligne et décalées l'une par rapport à l'autre de la distance dx/2.

## Patentansprüche

1. Verfahren zur Aufzeichnung und Behandlung eines Bildes einer Szene, die in einer Ebene P angegeben in bezug auf zwei senkrechte Richtungen x, y angeordnet ist, wobei das genannte Bild aus einem Aufnahme(Abtast)instrument (100) stammt, das in der Richtung u (u = x, y) der Ebene P eine Modulationsübertragungsfunktion $H_u(f)$ mit einer kritischen Frequenz (Grenzfrequenz) $f_{cu}$ aufweist, wobei f die Raumfrequenz darstellt, das umfaßt einerseits eine erste Stufe der Aufzeichnung des genannten Bildes mit einer Probenaufnahmefrequenz $f_{eu}$ des Bildes in der Richtung u, die gleich $kf_{cu}$ ist, worin k eine ganze Zahl von mehr als 1 darstellt, und andererseits eine zweite Stufe der Behandlung des aufgezeichneten Bildes, die darin besteht, daß auf das genannte Bild ein Dekonvolutionsfilter angewendet wird, dadurch gekennzeichnet, daß der Dekonvolutionsfilter in dem Frequenzbereich und für jede Richtung u gleich ist dem Produkt des Kehrwerts der Modulationsübertragungsfunktion $H_u(f)$ durch eine einstellbare Verkürzungsfunktion $I_u(f)$.

2. Verfahren nach Anspruch 1, dadurch gekennzeichnet, daß das genannte Aufnahme(Abtast)instrument mindestens einen Elementar-Detektor (121) aufweist, wobei die Grenzfrequenz (kritische Frequenz) $F_{cu}$ im wesentlichen gleich dem Kehrwert der Dimension $\Delta u$ des Bildes des genannten Elementar-Detektors in der Richtung u der Ebene P ist und die Probenaufnahmefrequenz $f_{eu}$ gleich $k/\Delta u$ ist.

3. Verfahren nach einem der Ansprüche 1 oder 2, dadurch gekennzeichnet, daß das Aufnahme(Abtast)instrument einen Elementar-Detektor (121) aufweist, daß die Aufzeichnung des genannten Bildes durch Abtasten des Bildes mit dem genannten Elementar-Detektor in den beiden Richtungen x, y der Ebene P durchgeführt wird.

4. Verfahren nach einem der Ansprüche 1 oder 2, dadurch gekennzeichnet, daß das genannte Aufnahme(Abtast)instrument (100) mindestens eine lineare Barrette (120) einer Vielzahl von Elementar-Detektoren (121) aufweist, deren Bilder in der Ebene P in der Richtung x ausgerichtet sind, wobei die Aufzeichnung des genannten Bildes durch Abtasten des Bildes der genannten linearen Barrette (120) in der Richtung y durchgeführt wird.

5. Vorrichtung zur Aufzeichnung und Behandlung eines Bildes einer Szene, die in einer Ebene P, angegeben in bezug auf zwei senkrechte Richtungen x, y, angeordnet ist, wobei das genannte Bild von einem Aufnahme(Abtast)instrument (100) geliefert wird, das in der Richtung u (u = x, y) der Ebene P eine Modulationsübertragungsfunktion $H_u(f)$ mit einer kritischen Frequenz (Grenzfrequenz) $f_{cu}$ aufweist, wobei f die Raumfrequenz darstellt, wobei die Vorrichtung umfaßt einerseits Mittel zur Aufzeichnung des genannten Bildes mit einer Probenaufnahmefrequenz $f_{eu}$ des Bildes in der Richtung u, die gleich $kf_{cu}$ ist, wobei k eine ganze Zahl von mehr als 1 darstellt, und andererseits Mittel zur Behandlung des aufgezeichneten Bildes durch Anwendung eines Dekonvolutionsfilters auf das genannte Bild, das dadurch charakterisiert ist, daß der genannte Dekonvolutionsfilter in dem Frequenzbereich und für jede Richtung u gleich ist dem Produkt des Kehrwerts der Modulationsübertragungsfunktion $H_u(f)$ durch eine einstellbare Verkürzungsfunktion $I_u(f)$, daß das genannte Aufnahme(Abtast)instrument mindestens einen Elementar-Detektor (121) aufweist und die kritische Frequenz (Grenzfrequenz) $f_{cu}$ im wesentlichen gleich ist dem Kehrwert der Dimension $\Delta u$ des Bildes des genannten Elementar-Detektors in der Richtung u der Ebene P, wobei die Probenaufnahmefrequenz $f_{eu}$ gleich $k/\Delta u$ ist, und daß das genannte Aufnahme(Abtast)instrument (100) mindestens eine lineare Barrette (120) einer Vielzahl von Elementar-Detektoren (121) aufweist, deren Bilder in der Ebene P in der Richtung x ausgerichtet sind, wobei die Aufzeichnung des genannten Bildes durch Abtasten des Bildes der genannten linearen Barrette (120) in der Richtung y erzeugt wird,
durch gekennzeichnet, daß das genannte Instrument (100) parallele lineare Barrette k (120, 120") mit gleichem Abstand dx aufweist, die in dem Abstand dx/k gegeneinander versetzt und in dem Abstand k'dx/k voneinander getrennt sind, wobei k' eine von 0 verschiedene ganze Zahl ist.

6. Vorrichtung nach Anspruch 4, dadurch gekennzeichnet, daß die Zahl k gleich 2 ist, daß das genannte Instrument (100) mindestens 2 parallele lineare Barrette (120', 120") mit gleichem Abstand dx aufweist, die auf einem optischen Zeilendivisor angeordnet sind und in einem Abstand dx/2 gegeneinander versetzt sind.

## Claims

1. Method of recording and processing an image of a scene situated in a given plane P referred to two perpendicular directions x, y, the said image being supplied by an imaging instrument (100) exhibiting, in the u direction (u = x, y) of the plane P, a modulation transfer function $H_u(f)$ of cutoff frequency $f_{cu}$, f designating the spatial frequency, the method comprising, on the one hand, a first step of recording the said image at a frequency of sampling $f_{eu}$ of the image in the u direction, equal to $kf_{cu}$, k being an integer greater than 1 and, on the other hand, a second step of processing the recorded image consisting in applying a deconvolution filter to the said image, characterized in that the said deconvolution filter is equal, in the frequency domain and for each u direction, to the product of the inverse of the modulation transfer function $H_u(f)$ and an adjustable truncation function $I_u(f)$.

2. Method according to Claim 1, characterized in that, as the said imaging instrument comprises at least one elementary detector (121) and the cutoff frequency $f_{cu}$ is substantially equal to the inverse of the dimension $\Delta u$ of the image of the said elementary detector in the u direction of the plane P, the sampling frequency $f_{eu}$ is equal to $k/\Delta u$.

3. Method according to one of Claims 1 or 2, characterized in that, as the said imaging instrument comprises an elementary detector (121), recording of the said image is produced by scanning the image of the said elementary detector in the two x, y directions of the plane P.

4. Method according to one of Claims 1 or 2, characterized in that, as the said imaging instrument (100) comprises at least one linear array (120) of a plurality of elementary detectors (121) whose images in the plane P are aligned in the x direction, recording of the said image is performed by scanning the image of the said linear array (120) in the y direction.

5. Device for recording and processing an image of a scene situated in a given plane P referred to two perpendicular directions x, y, the said image being supplied by an imaging instrument (100) exhibiting, in the u direction (u = x, y) of the plane P, a modulation transfer function $H_u(f)$ of cutoff frequency $f_{cu}$, f designating the spatial frequency, the device comprising, on the one hand, means of recording the said image at a frequency of sampling $f_{eu}$ of the image in the u direction, equal to $kf_{cu}$, k being an integer greater than 1 and, on the other hand, means of processing the recorded image applying a deconvolution filter to the said image, characterized in that the said deconvolution filter is equal, in the frequency domain and for each u direction, to the product of the inverse of the modulation transfer function $H_u(f)$ and an adjustable truncation function $I_u(f)$, characterized in that the said imaging instrument comprises at least one elementary detector (121) and the cutoff frequency $f_{cu}$ being substantially equal to the inverse of the dimension $\Delta u$ of the image of the said elementary detector in the u direction of the plane P, the sampling frequency $f_{eu}$ being equal to $k/\Delta u$, characterized in that the said imaging instrument (100) comprises at least one linear array (120) of a plurality of elementary detectors (121) whose images in the plane P are aligned in the x direction, recording of the said image being performed by scanning the image of the said linear array (120) in the y direction, characterized in that the said instrument (100) comprises k parallel linear arrays (120, 120"), of the same pitch dx, successively offset by the distance dx/k and separated from one another by the distance k'dx/k, k' being a non-zero integer.

6. Device according to Claim 4, characterized in that, as the number k is equal to 2, the said instrument (100) comprises at least two parallel linear arrays (120', 120") of the same pitch dx, arranged on an optical line divider and offset with respect to one another by the distance dx/2.

FIG.1

FIG.2

FIG.3

FIG.4a

FIG.4b

FIG.5

FIG.6